# NOUVEAU FASCICULE DE BREVET EUROPEEN

(11) **EP 2 995 508 B2**
(45) Date de publication et mention de la décision concernant l'opposition: **14.07.2021**
(45) Mention de la délivrance du brevet: 18.10.2017
(21) Numéro de dépôt: 15182700.3
(22) Date de dépôt: 27.08.2015
(51) Int. Cl.: B60R 19/40, B61F 19/08

(54) **DISPOSITIF DE PROTECTION DES PIÉTONS EN CAS DE CHOC AVEC UN VÉHICULE**
SCHUTZVORRICHTUNG FÜR DIE FUSSGÄNGER IM FALLE ZUSAMMENSTOSSES MIT EINEM KRAFTFAHRZEUG
DEVICE FOR PROTECTION OF PEDESTRIANS IN CASE OF IMPACT WITH A VEHICLE

(30) Priorité: 10.09.2014 FR 1458502
(43) Date de publication de la demande: 16.03.2016
(73) Titulaire: ALSTOM Transport Technologies, 93400 Saint-Ouen (FR)
(72) Inventeur: LE-BRETON, Frédéric, 17137 NIEUL SUR MER (FR); VIDAL, Guillaume, 17230 VILLEDOUX (FR); METAYER, Bernard, 17220 CROIX CHAPEAU (FR)
(74) Mandataire: Lavoix

(56) Documents cités:
- WO-A1-00/64707
- WO-A1-01/68407
- WO-A1-2005/000635
- WO-A1-2005/070742
- WO-A1-2014/122212
- DE-A1- 4 216 025
- DE-A1-102011 114 298
- DE-A1-102012 006 530
- DE-C- 148 622
- DE-C2- 3 013 022
- JP-A- 2003 341 513
- JP-A- 2008 254 497
- US-A1- 2014 007 790

## Description

La présente invention concerne un véhicule terrestre comportant une partie frontale, ladite partie frontale comportant un dispositif de protection comprenant : un pare-choc disposé à l'avant du véhicule ; un dispositif de détection de choc ou de présence, apte à détecter un obstacle en avant du véhicule.

Le document EP1334018 décrit un dispositif de dissipation d'énergie de choc équipant des véhicules, en particulier ferroviaires. Un tel dispositif présente des éléments absorbeurs d'énergie configurés de sorte qu'en cas de choc, une partie du véhicule est déployée à l'opposé du sens du choc et que l'espace intermédiaire généré par ce déploiement est rempli par les éléments absorbeurs d'énergie. Le document JP 2008 254497 A1 décrit un véhicule selon le préambule de la revendication 1. Ce type de dispositif est particulièrement adapté pour protéger les passagers du véhicule en cas de choc avec un obstacle, ou encore avec un autre véhicule.

Cependant, si l'obstacle est constitué par un piéton, ce dernier risque de graves blessures en cas de choc. Le piéton risque notamment d'être entraîné sous le véhicule et de passer sous les roues.

L'invention a pour but d'améliorer les dispositifs existants pour la protection des piétons en cas de choc frontal avec un véhicule, notamment de type véhicule ferroviaire, quel que soit la position du piéton au moment du choc : de face, de côté ou bien étendu au sol. En particulier, l'invention vise à empêcher un passage du piéton sous la partie frontale du véhicule.

A cet effet, l'invention a pour objet un véhicule terrestre selon la revendication 1.
Suivant des modes particuliers de réalisation, le véhicule comporte l'une ou plusieurs des caractéristiques des revendications 2 à 10, prises isolément ou selon toutes les combinaisons techniques possibles.

L'invention a également pour objet un procédé selon la revendication 11.

Suivant des modes particuliers de réalisation, le procédé comporte l'une ou plusieurs des caractéristiques des revendications 12 ou 13, prises isolément ou selon toutes les combinaisons techniques possibles.

L'invention a également pour objet un véhicule tel que décrit ci-dessus, muni de moyens de mise en oeuvre d'un procédé de protection tel que décrit ci-dessus.

L'invention sera mieux comprise à la lecture de la description qui va suivre, donnée uniquement à titre d'exemple et faite en se référant aux dessins sur lesquels :
- la figure 1 est une vue en perspective de l'avant d'un véhicule selon un mode de réalisation de l'invention, avant un choc frontal avec un piéton debout;
- la figure 2 est une vue latérale de l'avant du véhicule de la figure 1, avant un choc frontal ;
- la figure 3 est une vue en perspective de l'avant du véhicule de la figure 1, suite à détection d'un choc frontal ou détection d'une présence piéton;
- la figure 4 est une vue latérale de l'avant du véhicule de la figure 1, suite à détection d'un choc frontal ou détection d'une présence piéton ;
- la figure 5 est une vue latérale de l'avant du véhicule de la figure 1, suite à détection d'un choc frontal ou détection d'une présence piéton au sol ; et
- la figure 6 est une vue latérale de l'avant du véhicule de la figure 1, selon une variante de réalisation de l'invention, suite à détection d'un choc frontal ou détection d'une présence piéton.

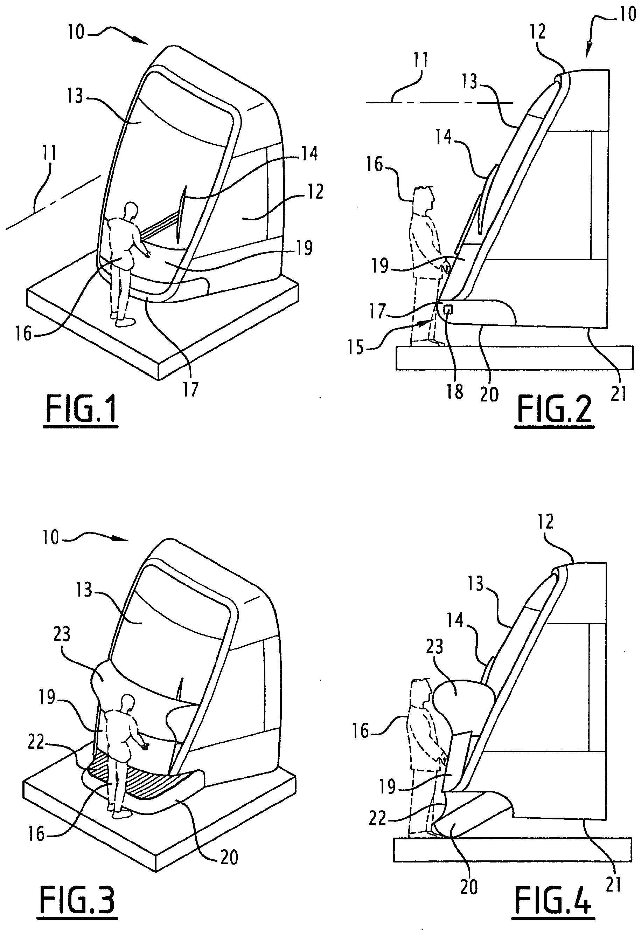

Le véhicule 10 représenté aux figures 1 et 2 est un véhicule ferroviaire de type train ou tramway, destiné à se déplacer selon un axe 11. Le véhicule 10 comporte une partie 12 frontale, formant l'avant dudit véhicule. La partie 12 frontale comprend notamment un pare-brise 13, éventuellement muni d'un essuie-glace 14. L'essuie-glace 14 peut être intégré en bas, en haut ou sur le côté du pare-brise.

Le véhicule 10 est équipé d'un dispositif 15 de protection d'un obstacle 16 en cas de choc frontal avec le véhicule 10. Le type d'obstacle considéré est notamment un piéton 16.

Le dispositif 15 comporte un pare-choc 17, également appelé carénage. Le pare-choc 17 est préférentiellement en saillie vers l'avant du véhicule 10.

Le pare-choc 17 est équipé d'un dispositif 18 de détection de choc ou de présence en avant du véhicule, représenté schématiquement à la figure 2. Le dispositif 18 de détection est apte à détecter, par contact ou sans contact, un obstacle en avant du véhicule. Le dispositif 18 est par exemple un dispositif électronique comportant des capteurs de contact, par exemple des capteurs de pression, ou des capteurs sans contact, par exemple des capteurs à infrarouge ou ultrason. Afin d'optimiser la vitesse de détection d'un choc frontal, les capteurs sont préférentiellement situés à l'avant du pare-choc 17.

De préférence, le pare-choc 17 est situé au bas de la partie 12 frontale, de manière à heurter en priorité les jambes du piéton 16 et non des régions vitales comme la tête ou les côtes, et en maitrisant les niveaux de traumatologie des parties genoux.

Le pare-choc 17 comprend un capot 19 situé à l'avant du véhicule 10, sous le pare-brise 13. Le capot 19 est par exemple formé par un carénage ou par un bandeau portant des phares. En situation normale de déplacement du véhicule 10, le capot 19 est dans une position fermée, représentée aux figures 1 et 2. Dans la position fermée, le capot 19 forme une surface continue avec le pare-brise 13.

En variante, le capot ne forme pas une surface continue avec le pare-brise, le capot étant par exemple positionné en avant par rapport au pare-brise.

Le capot 19 est apte à se déplacer vers une position ouverte. Par rapport à la position fermée, le capot 19 en position ouverte est éloigné de la partie frontale 12 en direction de l'avant du véhicule 10. Dans le mode de réalisation décrit ici et représenté aux figures 3, 4 et 5 en position ouverte, le capot 19 est relié à un moyen de pivotement vers l'avant du haut du capot 19. Ce moyen comprend par exemple des charnières.

Le capot 19 comprend un dispositif d'ouverture, tel qu'un vérin à ressorts associé à un loquet qui maintient le capot en position fermée. Le dispositif 18 de détection est apte à exécuter un programme selon lequel le loquet s'ouvre en cas de détection d'un choc ou de présence piéton au niveau du pare-choc 17, déclenchant le passage du capot 19 en position ouverte.

Le pare-choc 17 comprend également un volet 20 situé à l'avant du véhicule 10, en partie inférieure de la partie 12 frontale, soit plus bas que le capot 19. En situation normale de déplacement du véhicule 10, le volet 20 est dans une position fermée, représentée aux figures 1 et 2. En position fermée, le volet 20 forme une surface continue avec une surface 21 inférieure disposée sous la partie 12 frontale du véhicule 10.

Le volet 20 est apte à se déplacer vers une position ouverte, représentée aux figures 3, 4 et 5. Par rapport à la position fermée, le volet 20 en position ouverte est éloigné de la surface 21 en direction du bas. Dans le mode de réalisation décrit ici, le volet 20 est relié à un moyen de pivotement vers le bas de l'avant du volet 20.

Différents exemples de réalisation sont possibles, en combinaison ou non, pour le déclenchement de l'ouverture du capot 19 et le déclenchement de l'ouverture du volet 20, suite à détection d'un choc frontal ou détection d'une présence piéton par le dispositif 18 de détection.

Dans un premier exemple de réalisation, l'ouverture du capot 19 est déclenchée avant l'ouverture du volet 20. Le volet 20 est par exemple équipé d'un système de vérin à ressorts qui déclenche le pivotement vers le bas dudit volet, après libération d'un point d'accroche par l'ouverture du capot 19.

Dans un second exemple de réalisation, l'ouverture du volet 20 est déclenchée avant l'ouverture du capot 19.

Dans un troisième exemple de réalisation, l'ouverture du volet 20 est déclenchée sensiblement en même temps que l'ouverture du capot 19. Le volet 20 et/ou le capot 19 sont par exemple équipés d'un système de vérin à ressorts qui déclenche le déplacement dudit volet et dudit capot par la libération d'un loquet.

Après l'ouverture du volet 20, celui-ci est maintenu en appui au sol ou proche du sol jusqu'à l'immobilisation du véhicule 10.

D'autres modes de réalisation peuvent cependant être envisagés.

En cas de détection d'un choc frontal du véhicule 10 avec un piéton 16 ou détection d'une présence piéton, l'ouverture du volet 20 a pour objectif d'obstruer un espace entre le véhicule 10 et le sol pour empêcher le piéton de passer sous le véhicule, et notamment sous la partie 12 frontale du véhicule 10. Ainsi, aucune partie du corps du piéton 16 ne peut passer sous le véhicule 10, ce qui réduit les risques de graves blessures et facilite le dégagement du piéton 16.

Préférentiellement, le volet 20 présente une surface 22 de protection. La surface 22 est par exemple formée par un filet fixé à l'arrière du volet 20 et contenu à l'intérieur du véhicule 10 en position fermée du volet. Lorsque le volet est en position ouverte, la surface 22 est déployée dans un espace compris entre les positions ouverte et fermée du volet, de manière à combler l'espace ouvert entre le volet 20 et le capot 19.

Le dispositif 15 comporte en outre un moyen 23 d'absorption d'énergie de choc, apte à se déployer par gonflage en cas de détection de choc ou de présence piéton. Le moyen 23 est visible en position déployée aux figures 3, 4 et 5. Le moyen 23 est préférentiellement un coussin gonflable ou airbag, comprenant un générateur de gaz activé par l'ouverture du capot 19, après détection d'un choc ou d'une présence piéton par le dispositif 18. Par exemple, selon un système connu, l'actionneur ouvrant le capot 19 envoie un signal électrique à un dispositif pyrotechnique qui enflamme un réactif chimique, générant des gaz de gonflage.

Lorsque le capot 19 est en position fermée, l'airbag 23 est dans une position repliée derrière le capot 19. Lorsque le capot est en position ouverte, l'airbag 23 se déploie au-dessus d'un espace compris entre les positions ouverte et fermée du capot 19. L'airbag en position déployée, telle que représentée aux figures 3, 4 et 5, est situé devant le pare-brise 13 et devant l'essuie-glace 14. L'airbag 23 se déploie sur tout ou partie de la largeur du pare-brise 13.

Dans un mode de réalisation ne faisant pas partie de l'invention, le dispositif 15 de protection comporte seulement le volet 20 comme élément actif de protection, le capot 19 étant fixe et le dispositif 15 ne comportant pas d'airbag 23.

Dans un second mode de réalisation, le dispositif 15 de protection comporte seulement le volet 20 et le capot 19 comme éléments actifs de protection, le dispositif 15 ne comportant pas d'airbag 23.

Dans un troisième mode de réalisation, le dispositif 15 de protection comporte le volet 20, le capot 19 et l'airbag 23 comme éléments actifs de protection.

Un procédé de fonctionnement du dispositif 15 selon le troisième mode de réalisation ci-dessus va maintenant être décrit, en prenant comme exemple un obstacle de type piéton. Le véhicule 10 est muni de moyens de mise en oeuvre dudit procédé, tel qu'un programme mémorisé dans le dispositif 18.

La mise en oeuvre du procédé est déclenchée par la détection d'un choc ou d'une présence entre le pare-choc 17 du véhicule 10 et le piéton 16. La détection est réalisée par le dispositif 18 qui déclenche l'ouverture du capot 19 vers l'avant du véhicule 10. L'ouverture du capot 19 a pour but d'éjecter vers l'avant le piéton 16 pour l'éloigner de la partie 12 frontale. En particulier, l'ouverture du capot 19 vise à éloigner la tête du piéton 16 du pare-brise 13 et/ou de l'essuie-glace 14, qui présentent des risques de blessures graves.

L'ouverture du capot 19 provoque le déploiement de l'airbag 23, au-dessus d'un espace compris entre les positions ouverte et fermée du capot 19. L'airbag 23 vient ainsi prendre place entre la tête du piéton 16 et le pare-brise 13, offrant une protection supplémentaire audit piéton.

L'ouverture du capot 19 provoque en outre l'ouverture du volet 20 vers le bas du véhicule 10 pour éviter au piéton 16 d'être entraîné sous le véhicule.

En fonctionnement normal, le procédé peut déclencher un freinage d'urgence du véhicule dès détection d'une présence ou d'un choc, ou dès ouverture du volet 20 et/ou du capot 19. De préférence, le dispositif 18 de détection est actif uniquement pour des vitesses non nulles du véhicule 10.

En cas de dysfonctionnement, par exemple en cas de mauvais fonctionnement du loquet du capot 19, le procédé peut déclencher un freinage d'urgence du véhicule de manière simultanée à l'ouverture du volet 20.

Avant la remise en marche du véhicule, il est nécessaire d'accomplir certaines opérations de maintenance telles que : la remise en état de fonctionnement et le remplacement de l'airbag 23, celui-ci étant facilement déposable sans outillage ; la remise en place du volet 20, avec remplacement éventuel en cas de déformation ou rupture ; la remise en place du capot 19, avec remplacement éventuel ; le réarmement du dispositif 18 de détection.

Selon un mode de réalisation non représenté, la surface 22 comporte un airbag supplémentaire apte à se déployer entre le capot 19 et le volet 20, après ouverture du volet 20, afin de protéger un piéton tombé à terre.

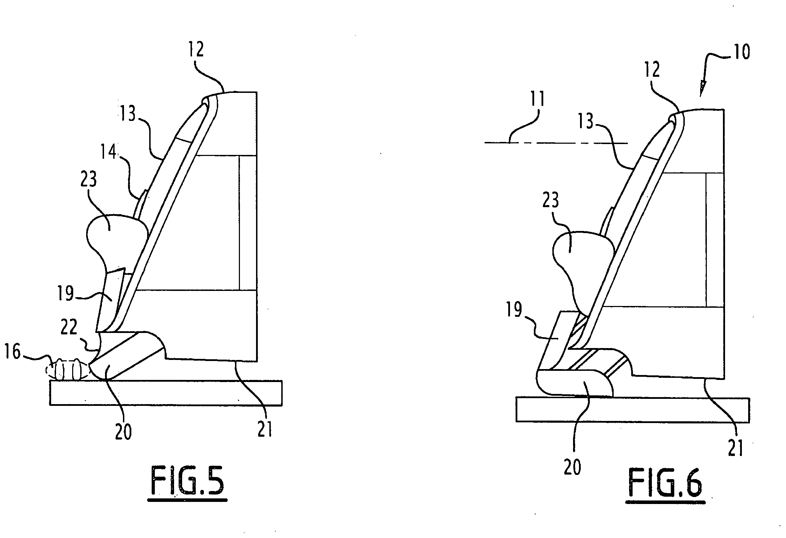

Selon un autre mode de réalisation représenté à la figure 6 en position ouverte, le capot 19 et le volet 20 sont fixes l'un par rapport à l'autre et sont aptes à translater en diagonale par rapport à la partie frontale 12, vers l'avant et en direction du sol.

Selon une variante non représentée au mode de réalisation de la figure 6, le capot 19 et le volet 20 ne sont pas fixes l'un par rapport à l'autre et sont aptes à translater, indépendamment l'un de l'autre, de la position fermée à la position ouverte.

## Revendications

1. Véhicule (10) terrestre comportant une partie (12) frontale, ladite partie frontale comprenant un dispositif (15) de protection, ledit dispositif de protection comprenant :
- un pare-choc (17) disposé à l'avant du véhicule (10) ;
- un dispositif (18) de détection de choc ou de présence, apte à détecter un obstacle (16) en avant du véhicule (10),
le pare-choc (17) comprenant un volet (20) situé à l'avant en partie inférieure de la partie (12) frontale du véhicule (10), ledit volet (20) étant apte à passer d'une position fermée à une position ouverte vers le bas du véhicule en cas de détection par le dispositif (18) d'un choc avec un piéton ou d'une présence d'un piéton en avant du véhicule, de sorte que ledit volet empêche un passage du piéton sous la partie (12) frontale du véhicule (10),
**caractérisé en ce que** ledit volet, en position ouverte vers le bas, est apte à obstruer un espace entre le véhicule et le sol, de sorte qu'aucune partie du corps du piéton ne puisse passer sous le véhicule,
et **en ce que** le pare-choc (17) comprend en outre un capot (19) apte à passer d'une position fermée à une position ouverte vers l'avant du véhicule en cas de détection par le dispositif (18) d'un choc ou d'une présence en avant du véhicule, de manière à éjecter vers l'avant l'obstacle (16) pour l'éloigner de la partie (12) frontale du véhicule (10).

2. Véhicule selon la revendication 1, tel que le dispositif (15) de protection comprend en outre un premier moyen (23) d'absorption d'énergie de choc, apte à se déployer par gonflage en cas de choc ou d'une présence en avant du véhicule.

3. Véhicule selon la revendication 2, tel que le moyen (23) d'absorption d'énergie de choc est configuré de sorte à se déployer au-delà d'un espace compris entre les positions fermée et ouverte du capot (19).

4. Véhicule selon la revendication 3, tel que le moyen (23) d'absorption d'énergie de choc est configuré de sorte à se déployer au-dessus de l'espace compris entre les positions fermée et ouverte du capot (19).

5. Véhicule selon la revendication 4, comprenant un pare-brise (13) situé au-dessus du pare-choc, tel que le moyen (23) d'absorption d'énergie de choc est configuré de sorte à se déployer devant le pare-brise.

6. Véhicule selon l'une quelconque des revendications précédentes, tel que le volet (20) est apte à passer par rotation ou translation de la position fermée à la position ouverte vers le bas du véhicule.

7. Véhicule selon la revendication 6, tel que le volet (20) est apte à passer par rotation de la position fermée à la position ouverte vers le bas du véhicule, le volet (20) comprenant en outre une surface (22) de protection apte à combler l'espace entre le volet (20) en position ouverte et le capot (19).

8. Véhicule selon la revendication 7, tel que la surface (22) de protection comprend en outre un second moyen d'absorption d'énergie de choc, apte à se déployer entre le capot (19) et le volet (20) après ouverture du volet (20).

9. Véhicule selon l'une quelconque des revendications 1 à 8, tel que le capot (19) est apte à passer par rotation ou translation de la position fermée à la position ouverte vers l'avant du véhicule.

10. Véhicule selon l'une quelconque des revendications 1 à 9, tel qu'en positions fermées du capot et du volet, le pare-choc est en saillie vers l'avant du véhicule.

11. Procédé de protection d'un véhicule (10), comprenant les étapes suivantes :
- détection d'un choc d'un piéton sur un pare-choc ou d'une présence d'un piéton au-devant du véhicule, pour un véhicule en condition de vitesse non nulle ;
- passage d'un volet (20) inférieur d'une position fermée à une position ouverte vers le bas du véhicule de sorte que ledit volet empêche un passage du piéton sous une partie frontale du véhicule, le volet obstruant alors un espace entre le véhicule et le sol de sorte qu'aucune partie du corps du piéton ne puisse passer sous le véhicule,
le procédé comprenant les étapes suivantes suite à l'étape de détection :
- passage d'un capot (19) du véhicule d'une position fermée à une position ouverte vers l'avant du véhicule,
- déploiement par gonflage d'un moyen (23) d'absorption d'énergie de choc, au-dessus d'un espace compris entre les positions fermée et ouverte du capot.

12. Procédé selon la revendication 11, tel que le passage du capot (19) en position ouverte est effectué avant ou après le passage du volet (20) en position ouverte, ou simultanément au passage du volet (20) en position ouverte.

13. Procédé selon l'une des revendications 11 et 12, comprenant en outre une étape de freinage d'urgence du véhicule suite à l'étape de détection.

14. Véhicule (10) selon l'une des revendications 1 à 10, muni de moyens de mise en œuvre d'un procédé selon l'une des revendications 11 à 13.

## Patentansprüche

1. Boden-Fahrzeug (10) mit einem Front-Abschnitt (12), wobei der besagte Front-Abschnitt eine Schutz-Vorrichtung (15) aufweist, wobei die besagte Schutz-Vorrichtung aufweist:
- einen Stoßfänger (17), der an der Vorderseite des Fahrzeugs (10) angeordnet ist,
- eine Vorrichtung (18) zur Detektion eines Stoßes oder einer Anwesenheit, die imstande ist, ein Hindernis (16) vor dem Fahrzeug (10) zu detektieren,
wobei der Stoßfänger (17) eine Klappe (20) aufweist, die vorne am unteren Abschnitt des Front-Abschnitts (20) des Fahrzeugs (10) angeordnet ist, wobei die besagte Klappe (20) imstande ist, von einer Geschlossen-Position in eine zum unteren Teil des Fahrzeugs hin geöffnete Position überzugehen im Falle einer Detektion, mittels der Vorrichtung (18), eines Stoßes mit einem Fußgänger oder einer Anwesenheit eines Fußgängers vor dem Fahrzeug, sodass die besagte Klappe ein Passieren des Fußgängers unter den Front-Abschnitt (12) des Fahrzeugs (10) verhindert,
**dadurch gekennzeichnet, dass**
die besagte Klappe in der zum unteren Teil hin geöffneten Position imstande ist, einen Raum zwischen dem Fahrzeug und dem Boden zu versperren, sodass kein Teil des Körpers des Fußgängers unter das Fahrzeug passieren kann
und dass der Stoßfänger (17) ferner eine Haube (19) aufweist, die imstande ist von einer Geschlossen-Position in eine zur Vorderseite des Fahrzeugs hin geöffnete Position überzugehen im Falle der Detektion, mittels der Vorrichtung (18), eines Stoßes oder einer Anwesenheit vor dem Fahrzeug, um das Hindernis (16) nach vorne hin wegzustoßen, um dieses von dem Front-Abschnitt (12) des Fahrzeugs (10) fern zu halten.

2. Fahrzeug gemäß Anspruch 1, wobei die Schutz-Vorrichtung (15) ferner aufweist ein erstes Mittel (23) zur Absorption von Stoßenergie, das imstande ist sich via Aufblasen zu entfalten im Falle eines Stoßes oder einer Anwesenheit vor dem Fahrzeug.

3. Fahrzeug gemäß Anspruch 2, wobei das Mittel (23) zur Absorption von Stoßenergie eingerichtet ist, um sich über einen Raum, der zwischen der Geschlossen-Position und der geöffneten Position der Haube (19) umfasst ist, hinausgehend zu entfalten.

4. Fahrzeug gemäß Anspruch 3, wobei das Mittel (23) zur Absorption von Stoßenergie eingerichtet ist, um sich über dem Raum, der zwischen der Geschlossen-Position und der geöffneten Position der Haube (19) umfasst ist, zu entfalten.

5. Fahrzeug gemäß Anspruch 4, aufweisend eine Windschutzscheibe (13), die über dem Stoßfänger angeordnet ist, wobei das Mittel (23) zur Absorption von Stoßenergie eingerichtet ist, um sich vor der Windschutzscheibe zu entfalten.

6. Fahrzeug gemäß irgendeinem der vorhergehenden Ansprüche, wobei die Klappe (20) imstande ist, via Rotation oder Translation von der Geschlossen-Position in die zum unteren Teil des Fahrzeugs hin geöffnete Position überzugehen.

7. Fahrzeug gemäß Anspruch 6, wobei die Klappe (20) imstande ist via Rotation von der Geschlossen-Position in die zum unteren Teil des Fahrzeugs hin geöffnete Position überzugehen, wobei die Klappe (20) ferner eine Schutz-Fläche (22) aufweist, die imstande ist, den Raum zwischen der Klappe (20) in der geöffneten Position und der Haube (19) abzudecken.

8. Fahrzeug gemäß Anspruch 7, wobei die Schutz-Fläche (22) ferner ein zweites Mittel zur Absorption von Stoßenergie aufweist, das imstande ist sich zwischen der Haube (19) und der Klappe (20) zu entfalten nach der Öffnung der Klappe (20).

9. Fahrzeug gemäß irgendeinem der Ansprüche 1 bis 8, wobei die Haube (19) imstande ist, via Rotation oder Translation von der Geschlossen-Position in die zur Vorderseite des Fahrzeugs hin geöffnete Position überzugehen.

10. Fahrzeug gemäß irgendeinem der Ansprüche 1 bis 9, wobei der Stoßfänger in den Geschlossen-Positionen der Haube und der Klappe zur Vorderseite des Fahrzeugs hin vorsteht.

11. Verfahren zum Schutz von einem Fahrzeug (10), aufweisend die folgenden Schritte:
- Detektieren eines Stoßes eines Fußgängers auf einen Stoßfänger oder einer Anwesenheit eines Fußgängers vor dem Fahrzeug, bei einem Fahrzeug, das in einem Geschwindigkeits-Zustand von ungleich Null ist,
- Überführen einer unteren Klappe (20) von einer Geschlossen-Position in eine zum unteren Teil des Fahrzeugs hin geöffnete Position, sodass die besagte Klappe ein Passieren des Fußgängers unter einen Front-Abschnitt des Fahrzeugs verhindert, wobei die Klappe dann einen Raum zwischen dem Fahrzeug und dem Boden versperrt, sodass kein Teil des Körpers des Fußgängers unter das Fahrzeug passieren kann,
wobei das Verfahren nach dem Schritt des Detektierens die folgenden Schritte umfasst:
- Überführen einer Haube (19) des Fahrzeugs von einer Geschlossen-Position in eine zur Vorderseite des Fahrzeugs hin geöffnete Position,
- Entfalten, durch Aufblasen, eines Mittels (23) zur Absorption von Stoßenergie über einem Raum, der zwischen der Geschlossen-Position und der geöffneten Position der Haube umfasst ist.

12. Verfahren gemäß Anspruch 11, wobei das Überführen der Haube (19) in die geöffnete Position bewirkt wird vor oder nach dem Überführen der Klappe (20) in die geöffnete Position, oder simultan mit dem Überführen der Klappe (20) in die geöffnete Position.

13. Verfahren gemäß einem der Ansprüche 11 und 12, ferner aufweisend einen Schritt des Notbremsens des Fahrzeugs folgend dem Schritt des Detektierens.

14. Fahrzeug (10) gemäß einem der Ansprüche 1 bis 10, ausgestattet mit Mitteln zur Durchführung eines Verfahrens gemäß einem der Ansprüche 11 bis 13.

## Claims

1. A land vehicle (10) including a front part (12), said front part comprising a protection device (15), said protection device comprising:
- a bumper (17) positioned in front of the vehicle (10);
- a device (18) for detecting an impact or presence, able to detect an obstacle (16) in front of the vehicle (10),
wherein the bumper (17) comprises a flap (20) situated in front in the lower part of the front part (12) of the vehicle (10), said flap (20) being able to go from a closed position to an open position toward the bottom of vehicle in case of detection by the device (18) of an impact with a pedestrian or presence of a pedestrian in front of the vehicle, so that said flap (20) prevents the pedestrian from passing below the front part (12) of the vehicle (10),
**characterized in that** said flap, in the open position, is able to fill an open space between the vehicle and the floor, such that no part of the body of the pedestrian can pass below the vehicle,
and **in that** the bumper (17) further includes a hood (19) able to go from a closed position to an open position toward the front of the vehicle if the device (18) detects an impact or presence in front of the vehicle, so as to eject the obstacle (16) forward to remove it from the front part (12) of the vehicle (10).

2. The vehicle according to claim 1, such that the protection device (15) further comprises a first energy absorbing means (23), able to be deployed by inflating in case of impact or presence in front of the vehicle.

3. The vehicle according to claim 2, such that the impact energy absorbing means (23) is configured so as to deploy beyond a space comprised between the closed and open positions of the hood (19).

4. The vehicle according to claim 3, such that the impact energy absorbing means (23) is configured so as to deploy above the space comprised between the closed and open positions of the hood (19).

5. The vehicle according to claim 4, comprising a windshield (13) situated above the bumper, such that the impact energy absorbing means (23) is configured so as to be deployed in front of the windshield.

6. The vehicle according to any one of the preceding claims, such that the flap (20) is able to go, by rotation or translation, from the closed position to the open position toward the bottom of the vehicle.

7. The vehicle according to claim 6, such that the flap (20) is able to go, by rotation, from the closed position to the open position toward the bottom of the vehicle, the flap (20) further comprising a protection surface (22) able to fill in the space between the flap (20) in the open position and the hood (19).

8. The vehicle according to claim 7, such that the protection surface (22) further comprises a second impact energy absorbing means, able to deploy between the hood (19) and the flap (20) after opening of the flap (20).

9. The vehicle according to any one of claims 1 to 8, such that the hood (19) is able to go, by rotation or translation, from the closed position to the open position toward the front of the vehicle.

10. The vehicle according to any one of claims 1 to 9, such that in the closed positions of the hood and the flap, the bumper protrudes toward the front of the vehicle.

11. A method for protecting a vehicle (10), comprising the following steps:
- detecting an impact of a pedestrian on a bumper or of a presence of a pedestrian in front of the vehicle, for a vehicle in a non-zero speed condition;
- moving a lower flap (20) from a closed position to an open position toward the bottom of the vehicle, such that said flap prevents the pedestrian from passing below a front part of the vehicle, the flap therefore filling an open space between the vehicle and the floor, such that no part of the body of the pedestrian can pass below the vehicle,
the method comprising the following steps after the detection step:
- moving a hood (19) of the vehicle from a closed position to an open position toward the front of the vehicle,
- deploying, by inflating, an impact energy absorbing means (23), above a space comprised between the closed and open positions of the hood.

12. The method according to claim 11, such that the passage of the hood (19) to the open position occurs before or after the passage of the flap (20) to the open position, or simultaneously with the passage of the flap (20) to the open position.

13. The method according to one of claims 11 and 12, further comprising a step for the emergency braking of the vehicle after the detection step.

14. The vehicle (10) according to one of claims 1 to 10, provided with means for implementing a method according to one of claims 11 to 13.
